# EUROPEAN PATENT SPECIFICATION

(11) **EP 1 874 065 B1**
(45) Date of publication and mention of the grant of the patent: **29.12.2010**
(21) Application number: 06300735.5
(22) Date of filing: 30.06.2006
(51) Int. Cl.: H04Q 3/00

(54) **Signalling system and method**
Signalisierungssystem und -verfahren
Système et procédé de signalisation

(43) Date of publication of application: 02.01.2008
(73) Proprietor: HEWLETT-PACKARD DEVELOPMENT COMPANY, L.P., Houston, TX 77070 (US)
(72) Inventor: BOUCKAERT, Philippe, 06901, Sophia-Antipolis (FR); GARNERO, Pierre, 06901, Sophia-Antipolis (FR); GERACI, Thierry, 06901, Sophia-Antipolis (FR)
(74) Representative: Harrison Goddard Foote

(56) References cited:
- EP-A- 1 626 589
- WO-A-98/49819

## Description

### Field of the invention

The present invention relates to a signalling system and method such as, for example, a system and method for routing signalling messages.

### Background to the Invention

Signalling System #7 (SS7) is a global standard for telecommunications defined by the International Telecommunication Union Telecommunication Standardization Sector (ITU-T), and national variants may be defined by, for example, the American National Standards Institute (ANSI). SS7 can be used, for example, for voice conversation set up, management and release between users. It can also be used, for example, for mobile subscriber authentication.

An SS7 network may be able to communicate with another type of network, such as a mobile telephone network. Communication between the networks is routed through a signalling gateway (SG). For example, the SG may be able to translate messages from a Mobile Switching Centre (MSC) in a mobile network, which uses global title addressing, into a SS7 format for routing through a SS7 network.

SCPs and application servers in a SS7 network provide features that could, in principle, be included within STPs and/or signalling gateways. However, there may be a large number of STPs or signalling gateways, or both, within a network. Therefore, including and maintaining these features on all STPs may be a complex and costly task. SCPs and application servers are, therefore, separated from STPs to avoid this problem, and there may be relatively few SCPs and application servers.

In some networks, a Mobile Application Part (MAP) operation is sent in a TCAP message from a mobile switching centre (MSC) that initiates a TCAP transaction with, for example, an application server. The TCAP message has an Invoke component (sometimes known as a TC-INVOKE component). The operation is generally transported within a TC-BEGIN message.

In other networks, a MAP operation is not sent with a TC-BEGIN message. Instead, the MAP operation is sent with the first TC-CONTINUE message sent by the MSC after the remote site, such as, for example, the application server, has acknowledged the transaction with a TC-CONTINUE message. This exchange of messages between nodes may be called a dialogue or part of a dialogue. The TC-BEGIN message does not contain a MAP operation where, for example, the TC-BEGIN message would be too large if it contained both the MAP operation and the application context. The application context may contain information such as, for example, the version of the operation being invoked. Some applications, however, require negotiation of the application context before the MAP operation and Invoke component.

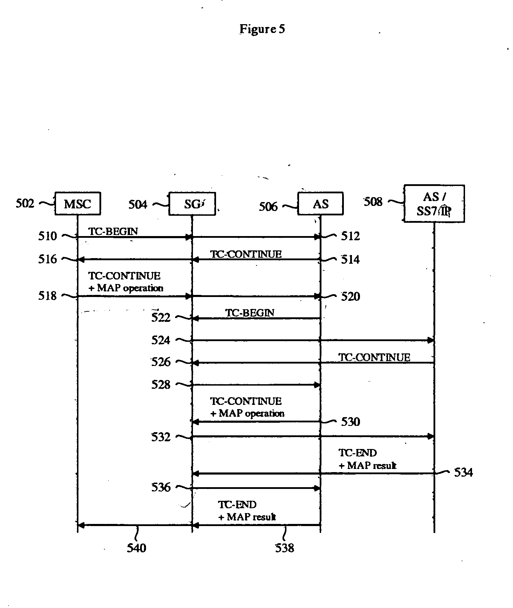

Figure 5 shows a network 500 comprising a mobile switching center (MSC) 502 which is in communication with a signalling gateway (SG) 504. The SG 504 is also in communication with a first application server (AS) 506 and a node 508, which is a second application server or another type of node located at a SS7 point code (PC).

The MSC 502 sends a MAP operation with the first TC-CONTINUE message sent by the MSC 502 after the remote site, which is the AS 506, has acknowledged the transaction with a TC-CONTINUE message. An example of a transaction within the network 500 is described below. In the example, the node 508 is an application server running a SMSC application, and the MSC receives a SMS message from a mobile user (not shown).

A first message 510 is sent by the MSC 502 to the SG 504. The TC-BEGIN message 510 is an "empty" TCAP message as it does not contain a component indicating the operation required by the MSC 502. The SG 504 forwards the communication to the application server 506 as a message 512. The application server acknowledges the communication from the MSC 502 by sending a TC-CONTINUE message 514 to the SG 504.

The application context is sent with the first TC-BEGIN message 510, and is acknowledged within the first TC-CONTINUE message 514 sent by the AS 506. The application context is not included subsequent within messages relating to this transaction.

The calling party address (CgPA) of the messages 510 and 512 is the address of the MSC 502. The calling party address of the message 514 is the address of the application server 506. When the SG 504 receives the message 514, it sets its own address as the calling party address and forwards the message as message 516 to the MSC 502. The SG 504 also stores a context relating to the transaction. The context contains the application context and the MSCs address (e.g. the global title of the MSC), received as the calling party address (CgPA) in the message 510.

The MSC then sends a TC-CONTINUE message 518 to the SG 504, which is forwarded as message 520 to the AS 506. The message 518 contains a MAP operation, such as, for example, "MO-forward-sm", that operation indicates the operation required by the MSC 502.

The application server 506 uses the information within the MAP message to consult a routing key (RK) library. The RK library is a database from which the application server 506 obtains the point code (PC) of the second application server (AS) 508 which is capable of processing "MO-forward-sm" operations. For example, the application server 508 is a SMS center (SMSC). The point code is obtained from the RK using, for example, the global title of the AS 508. The AS 506 therefore sends an empty TC-BEGIN message 522 to the SG 504, which is forwarded by the SG 504 to the AS 508 as message 524. The CgPA of the message 524 is set by the SG 504 to be the address of the mobile switching center (MSC) 502, as this is required by the AS 508 operating as or implementing a SMSC. The AS 508 acknowledges the message 524 by returning a TC-CONTINUE message 526 to the SG 504, which is forwarded to the AS 506 by the SG 504 as message 528.

The application server 506 then sends a TC-CONTINUE message 530 to the application server 508 via the SG 504, which, in turn, forwards the message as message 532. The message 530 and the message 532 contain the MAP operation first specified in the message 518. The CgPA of the message 532 is set by the SG 504 to be the address of the MSC 502, as required by the TCAP specification. The AS 508 can then carry out the operation specified in the MAP part of the message 532. Once this operation is completed, the application server (AS) 508 sends a TC-END message 534 to the SG 504. The TC-END message 534 contains a MAP message specifying the result of the operation carried out by the AS 508. The TC-END message 534 is forwarded by the SG 504 to the AS 506 as message 536. The CgPA of the message 536 is the address of the SG 504.

Finally, the MAP result from the message 536 is sent by the AS 506 in a TC-END message 538 to the SG 504, which forwards the message to the MSC 502 as message 540. The CgPA of the message 540 is the address of the SG 504.

It will be appreciated that it is particularly useful to be able to modify the calling party address in situations where more than one network entity such as, for example, the MSC described above uses the services of an intelligent network entity such as, for example, the SMSC described above. In all cases, the signalling gateway can change the originating or calling party address such that the SMSC always responds with messages back to the SG.

As communications within the transaction contain a modified calling party address (CgPA), the communication mechanism only works with "white book" TCAP specifications, which allow modification of the calling party address. Therefore, the communication mechanism is incompatible with "red book" and "blue book" TCAP specifications, which do no allow modification of the calling party address.

EP 1626589 discloses a method for operating a gateway to act as a conduit for peer-to-peer structured transactions.

It is an object of the invention at least to mitigate at least one of the problems of the prior art.

### Summary of the invention

According to a first aspect of embodiments of the invention, there is provided a signalling method, performed in a routing node of a network, for routing a signalling message, the method comprising the steps of:
exchanging signalling messages with an originating network entity comprising receiving a first signalling message, being a dialogue continue message, comprising a requested service;
determining an address of a destination network entity by consulting a database comprising the address of the destination node; said determining comprising accessing a context for identifying further messages associated with the first signalling message, wherein the context comprises at least any of an application context, a calling party address, a called party address, an originating transaction ID and a destination transaction ID; and
exchanging signalling message with the destination network entity; the exchanging comprising initiating a signalling dialogue with the destination network entity and sending a second signalling message comprising an indication of the requested service to the destination network entity.

Thus, embodiments of the present invention can be realised that integrate the functions of an application server into the routing node, where the functions include, for example, translation of addresses of incoming messages and/or access to a routing key. Embodiments of the present invention may be realised as, for example, at least part of a signalling gateway or an STP.

Embodiments are provided in which consulting the database comprises requesting the address from at least one of a process and a thread, the at least one of a local process and a local thread having access to the database, and receiving the address from the at least one of the local process and the local thread. The function of access to a database is, therefore, integrated with the routing node. The database may be, for example, a routing key. Preferably, the database is a local database, that is, a further network system does not need to be accessed, that is, addressed using, for example, SS7 signalling messages to access the database.

Embodiments provide a method wherein the at least one of the process and the thread performs the steps of initiating the dialogue with the destination network entity and sending the signalling message to the destination network entity.

Embodiments provide a method in which consulting the database comprises forwarding the dialogue continue message to at least one of a process and a thread, the at least one of a local process and a local thread having access to the database, and receiving the address from the at least one of the process and the thread.

Embodiments provide a method in which receiving the first signaling message comprising a requested service comprises receiving a message comprising a mobile application part (MAP) indicating the operation

Embodiments provide a method in which sending the second signaling message comprising the indication of the requested service to the destination network entity comprises forwarding the message including the mobile application part (MAP) indicating the operation to the destination network entity.

Embodiments of the present invention can be realised in the form of hardware, software or a combination thereof. Such software can be stored using a variety of storage such as, for example, magnetically or optically readable storage devices and associated media like an HDD, a CD or DVD drive or the like. Alternatively, the software might be stored using some form of memory such as, for example, a chip, ROM or RAM or some type of non-volatile storage device like flash memory. Suitably, a fourth aspect of embodiments of the present invention provides a computer program for routing a message from a source node, the message being intended for a recipient, wherein the computer program is arranged to locally consult a database at the node to determine an address for the recipient; and forward the message to the recipient.

### Brief description of the drawings

Embodiments of the invention will now be described, by way of example only, with reference
Figure 1 shows an embodiment of a signalling gateway according to an embodiment of the invention;
Figure 2 shows a process carried out by a signalling gateway process (SGP) according to an embodiment of the invention;
Figure 3 shows a process carried out by a specific process according to an embodiment of the invention;
Figure 4 shows a communication mechanism in part of a communications network according to an embodiment of the invention; and
Figure 5 shows a known communication mechanism in part of a communications network.

### Detailed description of embodiments of the invention

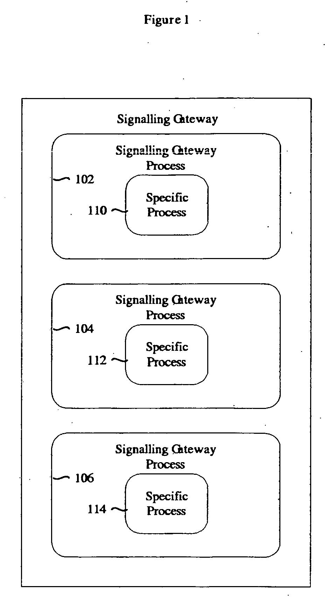

Referring to figure 1, there is shown a signalling gateway 100 comprising three signalling gateway processes (SGPs) 102, 104 and 106. Each of the SGPs 102, 104 and 106 includes or is associated with respective specific processes (SP) 110 to 114. Each SGP may carry out functions required by a signalling gateway. In addition, specific processes 110 to 114 provide additional functionality as described in more detail below.

The signalling gateway 100 is implemented as a number of SGPs 102, 104 and 106 for reliability purposes. If one SGP fails, one or more of the other SGPs may still be operational. However, in alternative embodiments, the SG 100 may include any number of SGPs, for example one SGP, two SGPs or more than three SGPs.

Each SGP 102, 104 or 106 manages incoming messages that have an Originating Transaction ID within a certain range. The ranges for the SGPs are arranged such that every possible Originating Transaction ID is covered by at least one SGP. Incoming messages are passed to the appropriate SGP.

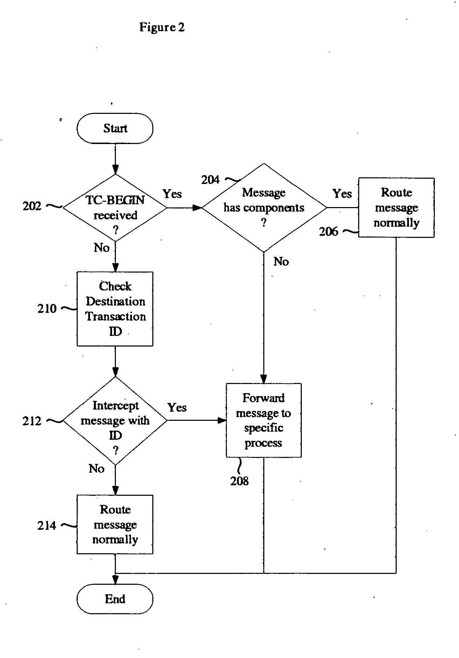

When an SGP receives a message, it begins a procedure 200 shown in figure 2. In step 202, it is determined whether or not the received message is a TCAP TC-BEGIN message. If the process determines the message is a TC-BEGIN message, processing continues from step 204 where it is determined whether or not the TC-BEGIN message contains any components. If it is determined that the message contains components, it is not an "empty" TC-BEGIN MESSAGE. Therefore, processing continues from step 206 where the message is routed normally by the signalling gateway, i.e. it is sent to the recipient indicated in the message.

If it is determined in step 204 that the message is an empty TC-BEGIN message, as it has no components, processing continues from step 208 where the message is forwarded to the specific process associated with the SGP.

If it is determined in step 202 that the message is not a TC-BEGIN message, processing continues from step 210 where the Destination Transaction ID of the message is checked. At step 212, it is determined whether or not the Destination Transaction ID is one that should be intercepted by the SGP, as it belongs to a transaction that is being managed by the SGP. An example of a transaction can be managed by the SGP is a "MO-forward-sm" operation sent by a mobile switching centre (MSC) to an SMS centre (SMSC).

If it is determined that the message should be intercepted, the message is forwarded to the specific process at step 208.

If it is determined at step 212 that the message should not be intercepted, processing continues from step 214, where the message is routed normally by the signalling gateway 100.

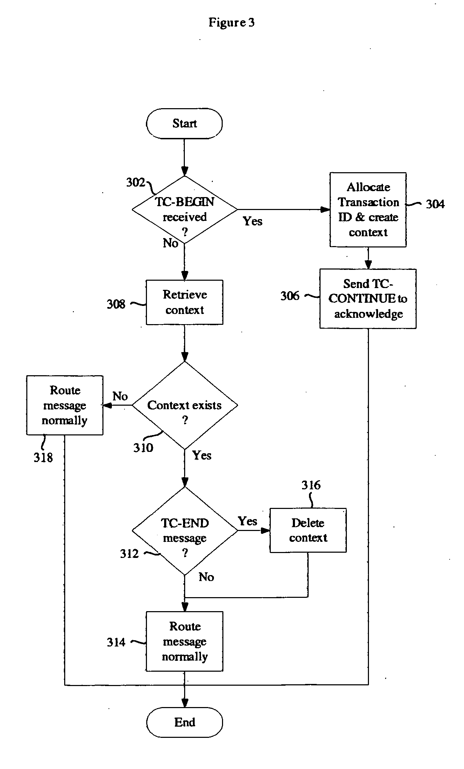

When a message is forwarded to the specific process in step 208, the specific process begins a procedure 300 as shown in figure 3. Referring to figure 3, at step 302, it is determined whether or not the message forwarded to the specific process is a TC-BEGIN message. If it is determined that the message is a TC-BEGIN message, processing continues from step 304 where a Destination Transaction ID is created for the dialog between the originating node, that is, the node that sent the TC-BEGIN message, and the signalling gateway 100, and a context is created. The Destination Transaction ID is included in any further messages between the originating node and the signalling gateway 100 that relate to the same dialog or transaction.

The context created by the signalling gateway 100 is used to identify later messages sent to the signalling gateway 100 that relate to or are associated with the same dialogue or transaction. In one embodiment, the context contains the following information:
- the application context
- the calling party address (CgPA)
- the called party address (CdPA)
- the Originating Transaction ID
- the Destination Transaction ID

The calling party address is the address of the originating node. The called party address is specified in the TC-BEGIN message. The called party address is, for example, the global title address of a SMS centre.

In step 306, a TC-CONTINUE message is sent to the originating node to acknowledge the TC-BEGIN message.

If it is determined in step 302 that the message received was not a TC-BEGIN message, processing continues from step 308 where an attempt is made to retrieve the context using information within the message, such as the Destination Transaction ID. Processing then continues from step 310, where it is determined whether or not a context exists that is associated with the message. If there is such a context, processing continues from step 312 where it is determined whether or not the message is a TC-END message. If it is determined that the message is not a TC-END message, processing continues from step 314, where the message is routed normally by the signalling gateway 100. The normal routing of the message may include, for example, creating a dialogue with an application server to forward a MAP operation to the application server within a TCAP message.

If it is determined in step 312 that the message is a TC-END message, processing continues from step 316 where the context is deleted because the context is no longer required, as there will be no further messages associated with the same transaction or dialogue. Processing then continues from step 314 as above.

If it is determined in step 310 that no context exists for the message, then the process continues from step 318, where the message is routed normally by the signalling gateway 100. The process then ends at step 328.

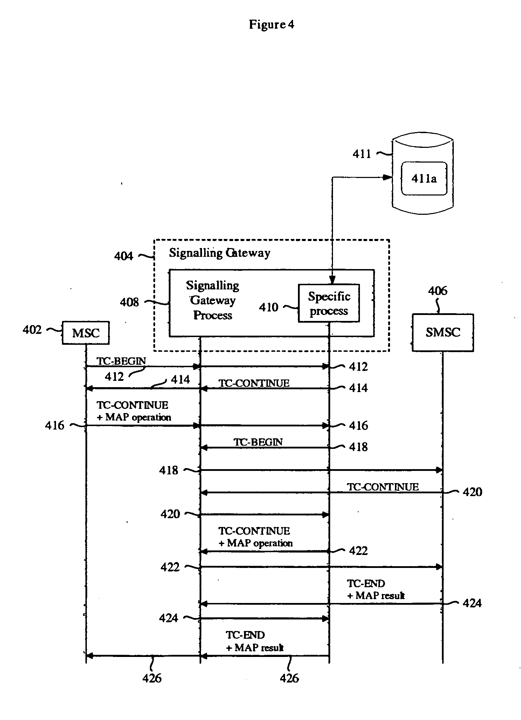

Figure 4 shows a communications network 400 including a mobile switching centre (MSC) 402, a signalling gateway (SG) 404 and a SMS centre (SMSC) 406. The signalling gateway 404 includes a signalling gateway process (SGP) 408, which is associated with at least a specific process (SP) 410. Only one SGP is shown, although the SG 404 may include more than one SGP in other embodiments. Similarly, only one SP 410 is illustrated, even though embodiments might comprise more that one SP 410. Also, embodiments of the present invention can be realised in which more than one MSC is in communication with the signalling gateway 404. Furthermore, embodiments can be realised in which the signalling gateway 404 is in communication with more than one SMSC.

Communications such as, for example, a SS7 message or other messages that reach the SG 404 are passed to the SGP 408, which is running on the SG 404. Where there are multiple SGPs, the appropriate Destination Transaction IDs of incoming messages are examined and the messages are passed to the appropriate SGPs.

When the MSC 402 requires a transaction such as, for example, a MAP operation, the MSC 402 sends a TC-BEGIN message 412 to the SG 404. The TC-BEGIN message 412 is an "empty" message, as it does not contain a component indicating the operation required by the MSC 402. The message 412 is passed to, and processed by, the SGP 408. When a message is sent to the SG 404 and it is passed to the SGP 408, the message is referred to in this specification as having been sent to the SGP 408. It will be appreciated by one skilled in the art that the operation required by the MSC 402 might be an operation other than a MAP operation.

Once the message 412 has been passed to the SGP 408, the SGP initiates processing shown in the flowchart 200 of figure 2. As the message 412 is an empty TC-BEGIN message, the SGP 408 passes the message 412 to the specific process 410 according to step 208 of the process 200.

The specific process 410 initiates the processing defined by the flowchart 300 of figure 3. The specific process 410 creates a context and acknowledges the message 412 with a TC-CONTINUE message 414, according to steps 304 and 306 of the process 300. The specific process 410 forwards the message 414 to the SGP 408, which, in turn, forwards the message 414 to the MSC 402.

Once the MSC 402 has received the confirmation message 414, the MSC sends a TC-CONTINUE message 416 to the SG 404, which provides the message 416 to the SGP 408 for processing. The TC-CONTINUE message 416 includes a mobile application part (MAP) containing an operation, such as "MO-forward-sm". The SGP 408 checks the Destination Transaction ID of the message 416 according to step 212 of the process 200 shown in figure 2. As the Destination Transaction ID matches that of the TC-BEGIN message 412, the SGP 408 forwards the message 416 to the specific process 410 according to step 208 of the process 200. The specific process 410 consults a database 411 such as, for example, a routing key, to obtain an address 411a for the SMSC 406. For example, if the message 416 includes a global title of the SMSC 406, the database may provide an SS7 point code (PC) for the SMSC 406.

The specific process 410 routes the TC-CONTINUE message 416 normally according to step 314 of the process 300 shown in figure 3. This involves creating a dialog with the SMSC 406 as follows. The specific process 410 creates an empty TC-BEGIN message 418, which it sends to the SMSC 406 via the SG 408. The SMSC 406 acknowledges the TC-BEGIN message 418 with a TC-CONTINUE message 420. The message 420 is received by the SGP 408, which forwards the message 420 to the specific process 410.

The specific process 410 then produces a TC-CONTINUE message 422, which is sent to the SMSC 406 via the SGP 408. The message 422 includes a mobile application part (MAP) containing the MAP operation sent by the MSC 402 in the message 416. The SMSC 406 is then able to carry out the operation specified in the message 416.

Once the operation has been completed, the SMSC 406 sends a TC-END message 424 to the SGP 408. The message 424 includes a MAP indicating the result of the operation. The SGP 408 checks the Destination Transaction ID of the message 424 in step 210 of the process in figure 2, and recognises the ID as an ID that should be intercepted and passed to the specific process 410 in step 208. The specific process 410 deletes the context associated with the TC-END message 424 in step 316 of the process 300 shown in figure 3, and then routes the message normally in step 326. A TC-END message 426 containing the MAP result is, therefore, sent to the MSC 402.

It should be noted that the signalling gateway does not modify the calling party address (CgPA) in any of the communications shown in figure 4. Therefore, embodiments of the invention comply with the "red book", "blue book" and "white book" TCAP specifications.

The specific process is described above as being an executable process. However, in alternative embodiments, the specific process may instead be implemented as one or more specific threads on the signalling gateway, other executable code or a feature implemented on the signalling gateway in some other way.

Messages sent in figure 4, for example between the MSC 402 and the SG 404 or between the SG 404 and the SMSC 406, may be sent using a direct link or may be sent via one or more network nodes such as, for example, one or more STPs.

Embodiments of the present invention are particularly useful where more than one originating network entity such as, for example, the above described MSC or MSCs seeks to use the same or one of number of destination network entities such as the above described SMSC or SMSCs. The MSCs are preferably provisioned to ensure that their SCCP messages are always addressed to the signalling gateway. The specific process within the signalling gateway maintains the mapping between the two TCAP legs or dialogues, that is, the signalling message exchange between an MSC and the SG and the signalling message exchange between the SG and the SMSC.

In an alternative embodiment, the signalling gateway and at least one of the MSC and the SMSC are provisioned so that they communicate with one another via hardwired connections.

Although the above embodiments have been described with reference to the managed transaction being a "MO-forward-sm" operation, they are not limited to such an arrangement. Embodiments can be realised in which other operations and messages are managed.

The above embodiments have been described with reference to an MSC using an SS7 network to obtain services from an SMSC. However, embodiments are not limited to such an arrangement. Embodiments can be realised in which the MSC, which is an embodiment of an originating network entity, is replaced by some other network entity desiring a network service. Furthermore, embodiments can be realised in which the SMSC, which is an embodiment of a destination network entity or an application server, is replaced by some other network entity capable of providing a service.

It will be appreciated the signalling messages described herein can be realised using embodiments of MSUs, that is, message signalling units.

It will be appreciated that the MSCs, SMSCs, SG are embodiments of network entities. Each of the network entities is addressable or accessible using signalling messages.

Alternatively or additionally, the SGPs and SPs may be embodiments of network entities.

## Claims

1. A signalling method, performed in a routing node of a network, for routing a signalling message, the method comprising the steps of:
exchanging signalling messages with an originating network entity comprising receiving a first signalling message, being a dialogue continue message, comprising a requested service;
determining an address of a destination network entity by consulting a database comprising the address of the destination node; said determining comprising accessing a context for identifying further messages associated with the first signalling message, wherein the context comprises at least any of an application context, a calling party address, a called party address, an originating transaction ID and a destination transaction ID; and
exchanging signalling messages with the destination network entity; the exchanging comprising initiating a signalling dialogue with the destination network entity and sending a second signalling message comprising an indication of the requested service to the destination network entity.

2. A method as claimed in claim 1 in which consulting the database comprises requesting the address from at least one of a process and a thread, the at least one of a local process and a local thread having access to the database, and receiving the address from the at least one of the process and the thread.

3. A method as claimed in claim 2, wherein the at least one of the process and thread performs the steps of initiating the dialogue with the destination network entity and sending the signalling message to the destination network entity.

4. A method as claimed in claim 1 in which consulting the database comprises forwarding the dialogue continue message to at least one of a process and a thread, the at least one of a local process and a local thread having access to the database, and receiving the address from the at least one of the process and the thread.

5. A method as claimed in any preceding claim in which receiving the first signalling message comprising a requested service comprises receiving a message comprising a mobile application part (MAP) indicating an operation.

6. A method as claimed in any of claims 1 to 5 in which sending the second signalling message comprising the indication of the requested service to the destination network entity comprises forwarding the message including the mobile application part (MAP) indicating an operation to the destination network entity.

7. A method as claimed in any preceding claim in which the database is a local database.

8. A signalling system for routing signalling messages comprising means to implement a method as claimed in any preceding claim.

9. A computer program comprising computer executable instructions for implementing a system or method as claimed in any preceding claim.

10. Computer-readable storage storing a computer program as claimed in claim 9.

## Patentansprüche

1. Signalisierungsverfahren, ausgeführt in einem Routing-Knoten eines Netzwerks, für das Routing einer Signalisierungsnachricht, wobei das Verfahren die folgenden Schritte umfasst:
das Austauschen von Signalisierungsnachrichten mit einer Ursprungsnetzwerkeinheit, wobei dies das Empfangen einer ersten Signalisierungsnachricht umfasst, bei der es sich um eine Dialogfortführungsnachrichthandelt, die einen angeforderten Dienst umfasst;
das Bestimmen einer Adresse einer Zielnetzwerkadresse durch Rückgriff auf eine Datenbank, welche die Adresse des Zielknotens umfasst; wobei das genannte Bestimmen den Zugriff auf einen Kontext zum Identifizieren weiterer Nachrichten umfasst, die der ersten Signalisierungsnachricht zugeordnet sind, wobei der Kontext zumindest einen Anwendungskontext, die Adresse eines anrufenden Teilnehmers, die Adresse eines angerufenen Teilnehmers, eine Ursprungstransaktionskennungund eine Zieltransaktionskennung umfasst; und
das Austauschen von Signalisierungsnachrichten mit der Zielnetzwerkeinheit; wobei das Austauschen das Einleiten eines Signalisierungsdialogs mit der Zielnetzwerkeinheit umfasst, und wobei das Senden einer zweiten Signalisierungsnachricht eine Indikation des angeforderten Dienstes an die Zielnetzwerkeinheit umfasst.

2. Verfahren nach Anspruch 1, wobei der Rückgriff auf die Datenbank das Anfordern der Adresse zumindest aus einem Prozess oder einem Thread umfasst, wobei der mindestens eine lokale Prozess oder mindestens eine lokale Thread Zugriff auf die Datenbank besitzt und die Adresse von dem mindestens einen Prozess oder mindestens einen Thread empfängt.

3. Verfahren nach Anspruch 2, wobei der mindestens eine Prozess oder der mindestens eine Thread die Schritte des Einleitens des Dialogs mit der Zielnetzwerkeinheit und des Sendens der Signalisierungsnachricht an die Zielnetzwerkeinheit ausführt.

4. Verfahren nach Anspruch 1, wobei der Rückgriff auf die Datenbank das Weiterleiten der Dialogfortführungsnachrichtan mindestens einen Prozess oder einen Thread umfasst, wobei der mindestens eine lokale Prozess oder der mindestens eine lokale Thread Zugriff auf die Datenbank besitzt, und wobei die Adresse von dem mindestens einen Prozess oder Thread empfangen wird.

5. Verfahren nach einem der vorstehenden Ansprüche,wobei das Empfangen der ersten Signalisierungsnachricht einen angeforderten Dienst umfasst, der das Empfangen einer Nachricht umfasst, welches einen Mobile ApplicationPart (MAP)umfasst, welcher eine Operation anzeigt.

6. Verfahren nach einem der Ansprüche 1 bis 5, wobei das Senden der zweiten Signalisierungsnachricht, welches die Indikation des angeforderten Dienstes an die Zielnetzwerkeinheit umfasst, das Weiterleitender Nachricht einschließlich des Mobile ApplicationPart (MAP)umfasst, welcher der Zielnetzwerkeinheit eine Operation anzeigt.

7. Verfahren nach einem der vorstehenden Ansprüche, wobei es sich bei der Datenbank um eine lokale Datenbank handelt.

8. Signalisierungssystem für das Routing von Signalisierungsnachrichten, wobei das System eine Einrichtungzum Implementieren eines Verfahrens nach einem der vorstehenden Ansprüche umfasst.

9. Computerprogramm, das durch einen Computer ausführbare Anweisungen zum Implementieren eines Systems oder Verfahrens nach einem der vorstehenden Ansprüche umfasst.

10. Computerlesbarer Speicher, der ein Computerprogramm nach Anspruch 9 speichert.

## Revendications

1. Procédé de signalisation, effectué dans un noeud de routage d'un réseau, pour router un message de signalisation, le procédécomprenant les étapes consistant à :
échanger des messages de signalisation avec une entité réseau d'origine comprenant la réception d'un premier message de signalisation, qui est un message de poursuite de dialogue, comprenant un service demandé ;
déterminer une adresse d'une entité réseau de destination en consultant une base de données comprenant l'adresse du noeud de destination ; ladite détermination comprenant l'étape consistant à accéder à un contexte pour identifier d'autres messages associés au premier message de signalisation, dans lequel le contexte comprend au moins l'un quelconque d'un contexte d'application, d'une adresse de partie appelante, d'une adresse de partie appelée, d'une ID de transaction d'origine et d'une ID de transaction de destination ; et
échanger des messages de signalisation avec l'entité réseau de destination ; l'échange comprenant l'étape consistant à initier un dialogue de signalisation avec l'entité réseau de destination et envoyer un second message de signalisation comprenant une indication du service demandé à l'entité réseau de destination.

2. Procédé selon la revendication1, dans lequel la consultation de la base de données comprend les étapes consistant à demander l'adresse à au moins l'un d'un processus et d'un fil, l'au moins un d'un processus local et d'un fil local ayant accès à la base de données, et à recevoir l'adresse de l'au moins un du processus et du fil.

3. Procédé selon la revendication2, dans lequel l'au moins un du processus et du fil effectue les étapes consistant à initier le dialogue avec l'entité réseau de destination et à envoyer le message de signalisation à l'entité réseau de destination.

4. Procédé selon la revendication1, dans lequel la consultation de la base de données comprend les étapes consistant à transmettre le message de poursuite de dialogue à au moins l'un d'un processus et d'un fil, l'au moins un d'un processus local et d'un fil local ayant accès à la base de données, et à recevoir l'adresse de l'au moins un du processus et du fil.

5. Procédé selon l'une quelconque des revendicationsprécédentes, dans lequel la réception d'un premier message de signalisation comprenant un service demandé comprend l'étape consistant à recevoir un message comprenant un applicatif du service mobile (en anglais « Mobile Application Part » - MAP) indiquant une opération.

6. Procédé selon l'une quelconque des revendications 1 à 5, dans lequel l'envoi du second message de signalisation comprenant l'indication du service demandé à l'entité réseau de destination comprend l'étape consistant à transmettre le message, y compris l'applicatif du service mobile (en anglais « Mobile ApplicationPart » - MAP) indiquant une opération à l'entité réseau de destination.

7. Procédé selon l'une quelconque des revendicationsprécédentes, dans lequel la base de données est une base de données locale.

8. Système de signalisation pour router des messages de signalisation comprenant des moyens pour mettre en oeuvre un procédéselon l'une quelconque des revendications précédentes.

9. Programme informatiquecomprenant des instructions exécutables par ordinateur pour mettre en oeuvre un système ou un procédéselon l'une quelconque des revendications précédentes.

10. Stockage lisible par ordinateur stockant un programme informatiqueselon la revendication9.
